Europäisches Patentamt

European Patent Office

Office européen des brevets

(19)

(11) Numéro de publication : **0 334 723 B1**

(12) # FASCICULE DE BREVET EUROPEEN

(45) Date de publication du fascicule du brevet :
18.09.91 Bulletin 91/38

(51) Int. Cl.⁵ : **B62D 7/14**

(21) Numéro de dépôt : 89400717.8

(22) Date de dépôt : 15.03.89

(54) **Dispositif de commande d'un verin hydraulique à double effet.**

(30) Priorité : 25.03.88 FR 8803911

(43) Date de publication de la demande :
27.09.89 Bulletin 89/39

(45) Mention de la délivrance du brevet :
18.09.91 Bulletin 91/38

(84) Etats contractants désignés :
DE ES FR GB IT

(56) Documents cités :
EP-A- 0 225 773
EP-A- 0 243 180
FR-A- 2 589 419
PATENT ABSTRACTS, vol. 10, no. 385
(M-548)[2442], 24 décembre 1986, page 84 M
548; & JP-A-61 175 182 (HINO MOTORS LTD)
06-08-1986
PATENT ABSTRACTS OF JAPAN, vol. 10, no.
291 (M-522)[2347], 3 octobre 1986, page 155 M
522; & JP-A-61 108 065 (MAZDA MOTOR
CORP.) 26-05-1986

(56) Documents cités :
PATENT ABSTRACTS OF JAPAN, vol. 10, no.
234 (M-507)[2290], 14 août 1986, page 135 M
507; & JP-A-61 67 671 (NISSAN MOTOR CO.,
LTD) 07-04-1986
PATENT ABSTRACTS OF JAPAN, vol. 8, no.
253 (M-339)[1690], 20 novembre 1984, page 87
M 339; & JP-A-59 128 055 (MAZDA K.K.) 24-
07-1984
PATENT ABSTRACTS OF JAPAN, vol. 8, no.
253 (M-339)[1690], 20 novembre 1984, page 86
M 339; & JP-A-59 128 054 (MAZDA K.K.) 24-
07-1984

(73) Titulaire : BENDIX EUROPE Services
Techniques S.A.
126 rue de Stalingrad
F-93700 Drancy (FR)

(72) Inventeur : Kervagoret, Gilbert Bendix France
Division technique 126 rue de Stalingrad
F-93700 Drancy (FR)
Inventeur : Tanguy, Christian Bendix France
Division technique 126 rue de Stalingrad
F-93700 Drancy (FR)

(74) Mandataire : Lejet, Christian
Bendix Europe Service Techniques Service
Brevets 126 rue de Stalingrad
F-93700 Drancy (FR)

EP 0 334 723 B1

**Description**

La présente invention est relative à un dispositif de commande d'un vérin hydraulique à double effet, ce dispositif étant utilisable notamment dans la commande d'un système d'orientation des roues arrière d'un véhicule automobile à roues avant directrices.

Pour commander les changements d'orientation des roues arrière d'un véhicule automobile simultanément, ou non, aux mouvements des roues avant, divers systèmes ont été proposés. Il est logique de penser à utiliser un vérin hydraulique à double effet, comprenant un distributeur agissant sous les impulsions d'un organe de commande électronique.

Une attention particulière doit être, bien entendu, apportée aux questions de sécurité. Lorsque le véhicule, roulant à grande vitesse, est engagé dans un tournant, une brusque défaillance de l'alimentation hydraulique ou de l'alimentation électrique ne doit entraîner aucun changement brusque de l'orientation des roues arrière, qui pourrait surprendre le conducteur et avoir des conséquences imprévisibles. D'autre part, au cas d'une défaillance du système hydraulique à l'arrêt ou à faible vitesse, il est avantageux de prévoir que les roues reviennent à la direction parallèle à l'axe du véhicule, de façon que celui-ci puisse continuer sa route en étant conduit à la même manière qu'un véhicule traditionnel à roues arrière d'orientation fixe.

La présente invention a pour but principal un dispositif de commande agissant de la façon qu'on vient de dire en cas de défaillance de la source de pression d'alimentation hydraulique, c'est-à-dire par exemple une panne de la pompe, ou une rupture de conduit d'alimentation, ce dispositif étant cependant de construction simple et peu coûteuse.

Pour obtenir ce résultat, l'invention concerne un dispositif de commande d'un vérin hydraulique à double effet, comprenant un ensemble distributeur commandant la mise en relation de chacune des deux chambres du vérin à volonté à une source de pression ou à un réservoir sans pression, cet ensemble distributeur étant commandé par un organe de commande électronique, qui présente pour particularité qu'il comprend un circuit principal incluant des moyens pour isoler les chambres du vérin par rapport au réservoir et à la source de pression en cas de défaillance de celle-ci, si bien que le piston du vérin est immobilisé dans la position qu'il occupait avant la défaillance, et qu'il comprend, en outre, un circuit auxiliaire incluant de moyens pour relier à volonté une des chambres à la source de pression et l'autre au réservoir, ces moyens étant commandés par un capteur sensible à la position du piston du vérin de façon à ramener le piston dans une position médiane, ces moyens n'intervenant qu'au cas où il y a simultanément une défaillance de la source de pression et un signal convenable émis par l'organe de commande.

On voit que l'ensemble du distributeur comprend deux circuits distincts, un circuit principal qui commande normalement le vérin et qui bloque le piston dans la position qu'il occupe au moment de l'apparition de la défaillance, et un circuit auxiliaire, qui, lorsqu'il reçoit un signal convenable émis par l'organe de commande, ramène le le piston du vérin dans sa position médiane. Le signal émis par l'organe de commande dans ce cas peut correspondre soit à une vitesse nulle du véhicule, soit à une vitesse faible avec une orientation des roues voisine de l'axe du véhicule.

De préférence, le circuit auxiliaire comprend des moyens pour ralentir le retour du piston à sa position. Ces moyens peuvent comprendre une restriction située sur les moyens reliant à volonté l'une ou l'autre des chambres à la source de pression et/ou sur les moyens reliant à volonté l'une ou l'autre des chambres au réservoir.

Dans le cas où de tels moyens de ralentissement sont prévus, on peut prévoir que la défaillance complète de l'organe de commande électronique entraîne la mise en action du second circuit. Dans le cas contraire, il est préférable que lors d'une défaillance complète de l'organe de commande, seuls les moyens du circuit principal agissent pour isoler les chambres du vérin et bloquer le piston.

En ce qui concerne le circuit de distribution principal, selon un premier mode de réalisation, il comprend, pour chaque chambre du vérin :

— une première électrovanne qui, dans une première position, relie directement la chambre à la source de pression, et, dans une seconde position, isole la chambre de la source de pression,

— une seconde électrovanne qui, dans une première position, relie directement la chambre au réservoir et, dans une seconde position, isole la chambre du réservoir,

— un clapet anti-retour associé à la première électrovanne et qui s'oppose au passage du fluide vers la source de pression si la pression de celle-ci est inférieure à une valeur donnée, et l'organe de commande agit sur les électrovannes soit pour les maintenir toutes dans la seconde position, soit pour simultanément amener la première électrovanne d'une chambre et la seconde électrovanne de l'autre chambre dans la première position, ou vice-versa en fonction des consignes reçues, et agit pour maintenir toutes les électrovannes dans la seconde position lorsqu'une défaillance de la source de pression est détectée.

Selon un autre mode d'exécution, le circuit de commande principal comprend, pour chaque chambre de vérin :

— une électrovanne à trois voies qui, dans une première position, relie une conduite d'alimentation à la source de pression, et dans une seconde position relie la conduite d'alimentation au réservoir,

— un clapet commandé, que met la chambre en communication avec le réservoir quand la conduite d'alimentation de l'autre chambre est reliée à la source de pression,

— et un clapet anti-retour, placé entre la chambre et l'électrovanne, et qui empêche le fluide de s'écouler de la chambre vers la conduite d'alimentation lorsque la pression dans celle-ci tombe au-dessous d'une valeur choisie,

et l'organe de commande agit sur les électrovannes soit pour les maintenir ensemble dans la première position, soit pour amener simultanément l'électrovanne d'une chambre dans la première position et l'électrovanne de l'autre chambre dans la seconde position, ou vice-versa en fonction des consignes reçues, et agit pour maintenir les électrovannes dans la seconde position lorsqu'une défaillance de la source de pression est détectée.

On peut prévoir que la ou les électrovannes de chaque chambre comportent une troisième position, qui isole complètement la chambre de la source de pression et du réservoir, et qu'elles viennent automatiquement dans cette troisième position en cas de défaillance de la source de pression, et/ou de l'organe de commande électronique. Le clapet anti-retour peut alors être soit supprimé, soit maintenu pour doubler la sécurité.

En ce qui concerne le circuit de distribution auxiliaire, selon un premier mode d'exécution, il comprend, pour chaque chambre du vérin, une valve à tiroir apte à mettre la chambre en communication soit avec le réservoir, soit avec la source de pression, ces valves étant commandées par la position du piston du vérin de telle sorte que, si le piston est écarté d'une position médiane, la différence de pression dans les chambres tend à le ramener dans cette position médiane, et des moyens, commandés par l'organe de commande, pour isoler les deux chambres desdites valves, ou pour isoler lesdites valves du réservoir et de la source de pression.

Suivant un autre mode de réalisation du circuit de commande auxiliaire, les moyens pour isoler les deux chambres comprennent une électrovanne capable de relier une conduite auxiliaire soit au réservoir soit à la source de pression, cette conduite auxiliaire étant reliée aux valves à travers un clapet qui se ferme quand la conduite auxiliaire est reliée au réservoir, et la conduite auxiliaire étant d'autre part connectée à un clapet commandé, qui relie les vannes au réservoir quand la conduite auxiliaire est sous pression et les en isole quand la conduite auxiliaire est reliée au réservoir. De préférence, dans ce cas, les moyens pour isoler les deux chambres comprennent une vanne d'isolation placée entre chaque chambre et la vanne à tiroir correspondante, ces vannes d'isolation étant actionnées par la pression de l'accumulateur de pression, auquel elles sont reliées à travers une électrovanne elle-même commandée par l'organe de commande.

Ces deux réalisations ne sont pas tout à fait équivalentes, la seconde est plus simple et plus économique, mais elle a des temps de réponse un peu moins courts que la première.

L'invention va maintenant être décrite à l'aide d'exemples pratiques de réalisation, illustrés avec les dessins, parmi lesquels :

Figure 1 représente un schéma théorique d'une première réalisation conforme à l'invention, et

Figure 2 représente le schéma théorique d'une seconde réalisation conforme à l'invention.

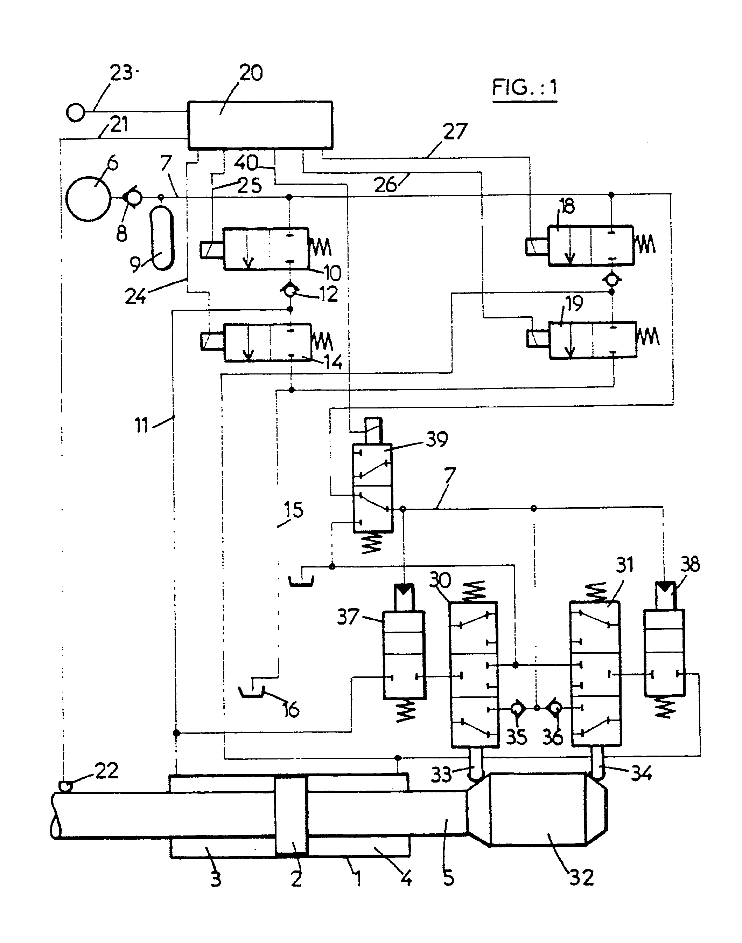

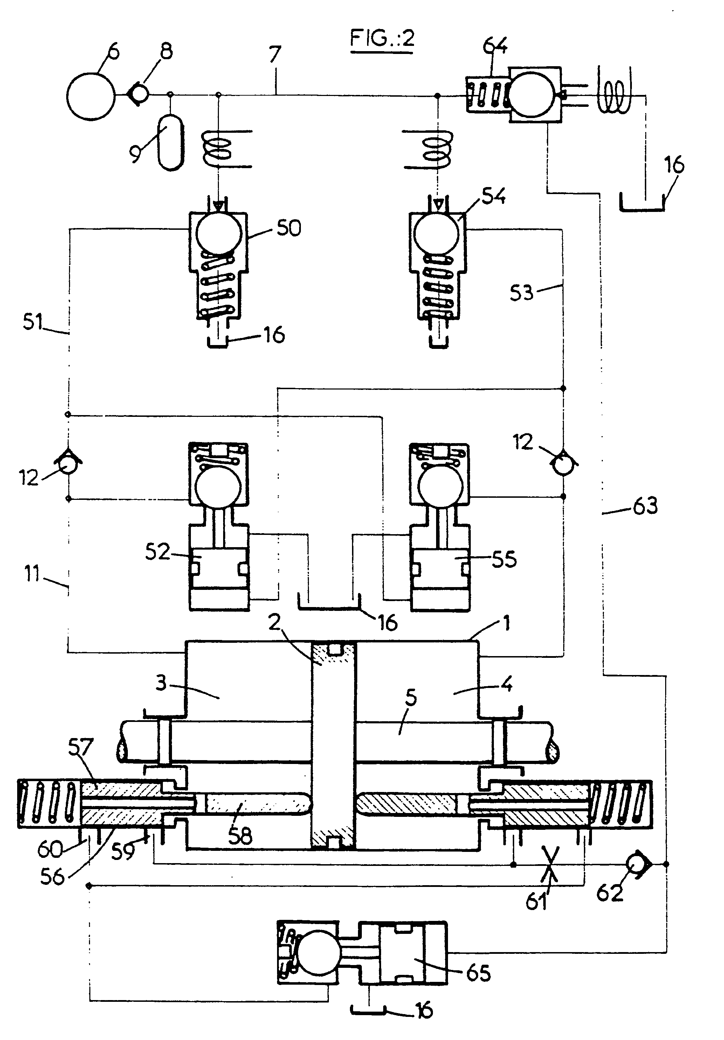

Les dispositifs des figures 1 et 2 comprennent chacun un circuit de commande principal et un circuit de commande auxiliaire. Il est précisé ici que rien ne s'oppose à ce que le circuit de commande auxiliaire du second exemple soit associé au circuit de commande principal du premier exemple, et vice-versa.

Dans les deux exemples, les mêmes organes portent les mêmes repères.

Un vérin à double effet 1 est divisé par un piston 2 en deux chambres 3 et 4, de volume variable. Le piston est monté sur une tige 5. L'alimentation hydraulique est assurée par une pompe 6, reliée à une conduite d'alimentation 7 à travers un clapet anti-retour 8. La conduite d'alimentation 7 est également reliée à un accumulateur de pression 9.

Le circuit de commande principal comprend, pour la chambre 3, une première électrovanne 10, qui est raccordée d'une part à la conduite haute pression 7, et d'autre part à la conduite 11 d'alimentation de la chambre 3, à travers un clapet anti-retour 12, qui s'oppose au passage du fluide contenu dans la conduite 11 vers l'électrovanne 10, au cas où la différence de pression entre ces organes dépasse une valeur fixée à l'avance.

L'électrovanne 10, dans une position, relie directement la conduite 7 au clapet anti-retour 12, et, dans l'autre position, l'isole de ce clapet.

Une deuxième électrovanne 14 relie la conduite 11 d'alimentation de la chambre 3 à une conduite 15 menant au réservoir 16, ou l'isole de cette conduite.

La partie du circuit de commande principal qui est relative à la seconde chambre 4 du vérin comprend deux électrovannes 18, 19 disposés exactement de la même manière que les électrovannes 10 et 14, si bien qu'il n'est pas nécessaire de les décrire plus en détail.

Le dispositif de commande principal est commandé par un microprocesseur 20, qui comporte plusieurs entrées, dont l'une 21 est reliée à un capteur de position 22, sensible à la position du piston 2 dans le vérin 1. D'autres entrées, symbolisées en 23, fournissent au microprocesseur des informations correspondant, par exemple, au braquage des roues avant, à la vitesse du véhicule, au fonctionnement de la pompe 6, etc.. Le processeur comporte, entre autres, quatre sorties 24, 25, 26, 27, qui commandent chacune une des électrovannes 10, 14, 18, 19. Si, par exemple, un certain braquage est détecté aux roues avant, le processeur 20 commandera simultanément l'ouverture des électrovannes 10 et 19, qui mettent les chambres 3 et 4 respectivement en communication avec la conduite de haute pression 7 et avec la conduite de décharge 15. Cela entraînera un déplacement du piston 2, jusqu'à ce que le détecteur 22 ait constaté que la position de ce piston, et par conséquent des roues arrière commandées, correspond à la consigne.

Supposons qu'au cours de la manoeuvre, il apparaisse une brusque défaillance dans le circuit haute pression, par exemple une rupture de la conduite 7, la baisse de pression correspondante entraînera la mise en action du clapet anti-retour 12. La chambre 3 sera alors isolée, et le piston 2 immobilisé sensiblement dans la position qu'il occupe au moment où l'avarie est apparue.

Le circuit de commande auxiliaire est destiné à ramener le piston du vérin dans sa position médiane en cas d'avarie du système d'alimentation en pression, à condition que certains impératifs soient réalisés, par exemple une vitesse très basse.

Il comprend deux distributeurs 30, 31, à centres fermés, affectés l'un à la première chambre 3 du vérin et l'autre à la seconde chambre 4.

Ces distributeurs sont à commande mécanique grâce à une came 32, solidaire de l'arbre 5 qui porte le piston 2. Lorsque la came 32 est dans une position médiane, des suiveurs de came 33, 34 qui commandent les distributeurs 30 et 31 maintiennent ceux-ci dans la position centrale de fermeture. Lorsque la came est déplacée, avec le piston 2, vers la gauche ou vers la droite, la chambre 3, par exemple, est mise en communication avec la conduite 7 d'alimentation haute pression, et la chambre 4, en communication avec le réservoir 16. Des clapets anti-retour 35, 36 s'opposent à ce que l'une ou l'autre des chambres se déverse complètement dans la conduite d'alimentation 7, au cas d'une baisse trop prononcée de pression dans celle-ci.

La liaison entre les distributeurs 30, 31 et des chambres correspondantes 3, 4 est commandée par deux hydrovannes 37, 38, intercalées entre le distributeur 30, 31 et la chambre correspondante 3, 4. Ces hydrovannes 37, 38 sont elles-mêmes commandées par une électrovanne 39, qui envoie sur leurs pistons de commande la pression contenue dans l'accumulateur de pression 9. Cette opération n'a lieu que sur commande du microprocesseur 20, transmise par une sortie spéciale 40.

En temps normal, les chambres 3 et 4 sont donc isolées du système de commande auxiliaire par les hydrovannes 37, 38. On comprendra que l'électrovanne 39 n'est actionnée, par l'intermédiaire de la sortie 40, que si le processeur 20 a détecté les conditions nécessaires à cette mise en action, c'est-à-dire simultanément une défaillance de l'alimentation en pression et, par exemple, une vitesse faible ou nulle du véhicule.

On observera que le dispositif de commande auxiliaire ne fonctionne pas si l'électrovanne 39 est privée d'impulsions, c'est-à-dire au cas où le processeur 20 est hors de fonctionnement.

La figure 2 est relative à un dispositif comportant une variante du circuit de commande principal et une variante du circuit de commande auxiliaire.

Le circuit de commande principal comprend, pour la chambre 3, une électrovanne à trois voies 50, qui met en communication une conduite 51, soit avec la conduite haute pression 7, soit avec le réservoir 16. Lorsque l'électrovanne 50 n'est pas excitée, elle met la conduite 51 en communication avec le réservoir.

La conduite 51 est reliée, à travers un clapet antiretour 12, à la conduite 11 d'alimentation de la chambre 3. La conduite 11 est également reliée au réservoir par l'intermédiaire d'un clapet commandé 52. Ce clapet est commandé par la pression existant dans la conduite 53, symétrique de la conduite 51, dans le circuit correspondant à la seconde chambre 4 du vérin. Si l'électrovanne 54, symétrique de l'électrovanne 50, qui commande la pression dans la seconde chambre 4, est commandée, la pression dans la conduite 53 fait que le clapet 52 s'ouvre et que la chambre 3 est mise au réservoir. Réciproquement, si l'électrovanne 50 est excitée, la pression dans la conduite 51 commande l'ouverture d'un clapet 55 qui met au réservoir la chambre 4. Ainsi, les chambres 3 et 4 sont alternativement l'une sous pression, l'autre au réservoir. Si cependant les deux électrovannes 50, 54 sont au repos, les deux chambres 3 et 4 sont maintenues sous pression par la fermeture des clapets 52, 55 et des clapets anti-retour 12. Au cas où, pendant une manoeuvre, la pression chuterait dans la conduite haute pression 7, cela entraînerait la fermeture du clapet 52 ou 55 qui serait ouvert et, par conséquent, l'isolement automatique des chambres 3 et 4.

Le circuit de commande auxiliaire comprend, pour chaque chambre, un distributeur 56, monté directement sur une extrémité du vérin 1, et dont le tiroir 57 est commandé par un poussoir 58, en appui directement sur le piston 2.

Le distributeur 56 comprend une arrivée haute pression 59, et une sortie basse pression 60. Quand le tiroir est en position médiane, l'arrivée 59 et la sortie 60 sont obturées. Lorsque le tiroir est déplacé vers la gauche de la figure 2, l'entrée 59 communique avec l'intérieur de la chambre 3, et lorsque le tiroir est déplacé vers la droite, la chambre 3 est mise en communication avec la sortie 60, par l'intermédiaire d'un perçage axial du tiroir.

L'entrée 59 est reliée à la conduite haute pression 7 par l'intermédiaire d'une restriction 61, d'un clapet anti-retour 62, d'une conduite 63 et d'une électrovanne 64. La sortie 60 est reliée au réservoir 16 par l'intermédiaire d'un clapet 65, qui ne s'ouvre que lorsque la pression dans la conduite 63 est suffisante.

L'électrovanne 64 est une électrovanne à trois voies, qui met en communication la conduite 62 avec le réservoir 16 quand elle est excitée, et avec la conduite haute pression 7 uniquement quand elle n'est pas excitée sous la commande du processeur 20.

En temps normal, l'électrovanne 64 est excitée, si bien que la chambre 3 est isolée du réservoir par la fermeture simultanée du clapet anti-retour 62, et du clapet 65. Il en est de même de la chambre 4, ce qui signifie que le circuit de commande auxiliaire est inactif.

Si l'électrovanne 64 n'est pas excitée, la conduite 63 se trouve reliée à la conduite haute pression 7, et même si la pression dans celle-ci est inférieure à la normale, elle n'est pas nulle grâce à la présence de l'accumulateur de pression 9 et du clapet anti-retour 8. Il en résulte que le clapet 65 est ouvert. Un déplacement du piston, entraînant un déplacement du tiroir, a pour conséquence qu'une des chambres 3, 4 se trouve reliée à la conduite haute pression 7, et l'autre au réservoir 16, et la force développée tend à ramener le piston dans sa position médiane. La restriction 61 empêche le retour de se faire de façon brusque.

On observera que, dans cette disposition, à l'opposé de celle de la figure 1, le dispositif de commande fonctionne au cas où l'électrovanne n'est pas excitée à la suite d'un arrêt de fonctionnement du processeur 20. Le retour du piston à la position médiane se fait de façon progressive, grâce à la présence de la restriction 61, et donc sans risque de surprendre le conducteur du véhicule.

## Revendications

1. Dispositif de commande d'un vérin hydraulique à double effet, comprenant un ensemble distributeur commandant la mise en relation de chacune des deux chambres (3, 4) du vérin (1) à volonté à une source de pression (6, 9) ou à un réservoir sans pression (16), cet ensemble distributeur étant commandé par un organe de commande électronique (20), caractérisé en ce qu'il comprend un circuit principal incluant des moyens pour isoler les chambres du vérin par rapport au réservoir et à la source de pression en cas de défaillance de celle-ci, si bien que le piston (3) du vérin est immobilisé dans la position qu'il occupait avant la défaillance, et en ce qu'il comprend en outre un circuit auxiliaire incluant des moyens pour relier à volonté une des chambres à la dite source de pression (6, 9) et l'autre au réservoir (16), ces moyens étant commandés par un capteur (32 à 34, 58) sensible à la position du piston du vérin de façon à ramener le piston dans une position médiane, ces moyens n'intervenant qu'au cas où il y a simultanément une défaillance de la source de pression et un signal convenable émis par l'organe de commande.

2. Dispositif selon la revendication 1, caractérisé en ce que le circuit auxiliaire comprend des moyens pour ralentir le retour du vérin à sa position médiane.

3. Dispositif selon la revendication 2, caractérisé en ce que lesdits moyens de ralentissement comprennent une restriction (61) située sur les moyens reliant à volonté l'une ou l'autre des chambres à la source de pression et/ou sur les moyens reliant à volonté l'une ou l'autre des chambres au réservoir.

4. Dispositif selon la revendication 1 ou 2, caractérisé en ce que la défaillance complète de l'organe de commande électronique entraîne la mise en action des moyens pour ramener le piston dans une position médiane.

5. Dispositif selon la revendication 1, caractérisé en ce que la défaillance complète de l'organe de commande entraîne l'isolement des chambres du vérin et l'immobilisation du piston.

6. Dispositif selon l'une des revendications 1 à 5, caractérisé en ce qu'il comprend pour chaque chambre du vérin :
— une première électrovanne (10, 18) qui, dans une première position, relie directement la chambre à la source de pression, et, dans une seconde position isole la chambre de la source de pression,
— une seconde électrovanne (14, 19) qui, dans une première position, relie directement la chambre au réservoir (16) et, dans une seconde position, isole la chambre du réservoir,
— un clapet anti-retour (12) associé à la première électrovanne et qui s'oppose au passage de fluide vers la source de pression si la pression de celle-ci est inférieure à une valeur donnée, et en ce que l'organe de commande (20) agit sur les électro-vannes soit pour les maintenir toutes dans la seconde position, soit pour amener simultanément la première électrovanne d'une chambre et la seconde électrovanne de l'autre chambre dans la première position, ou vice-versa en fonction des consignes reçues, et agit pour maintenir toutes les électrovannes dans la seconde position lorsqu'une défaillance de la source de pression est détectée.

7. Dispositif selon l'une des revendications 1 à 5, caractérisé en ce qu'il comprend pour chaque chambre du vérin :
— une électrovanne à trois voies (50, 54) qui dans une première position relie un conduit d'alimentation à la source de pression, et dans une seconde position relie la conduite d'alimentation au réservoir,

— un clapet commandé (52, 55), qui met la chambre en communication avec le réservoir quand la conduite d'alimentation de l'autre chambre est reliée à la source de pression,

— et un clapet anti-retour (12), placé entre la chambre et l'électrovanne, et qui empêche le fluide de s'écouler de la chambre vers la conduite d'alimentation lorsque la pression dans celle-ci tombe au-dessous d'une valeur choisie,

et en ce que l'organe de commande agit sur les électrovannes soit pour les maintenir dans la première position, soit pour amener simultanément l'électrovanne d'une chambre dans la première position et l'électrovanne de l'autre chambre dans la seconde position, ou vice-versa en fonction des consignes reçues, et agit pour maintenir les électrovannes dans la deuxième seconde position lorsqu'une défaillance de la source de pression est détectée.

8. Dispositif selon l'une des revendications 6 ou 7, caractérisé en ce que la ou les électrovannes de chaque chambre comportent une troisième position, qui isole complètement la chambre de la source de pression et du réservoir, le clapet anti-retour étant alors éventuellement supprimé.

9. Dispositif selon l'une des revendications 1 à 8, caractérisé en ce qu'il comprend, en outre, pour chaque chambre du vérin, une valve à tiroir (30, 31) apte à mettre la chambre en communication soit avec le réservoir (16) soit avec la source de pression (6, 9), ces valves étant commandées par la position du piston du vérin de telle sorte que, si le piston est écarté d'une position médiane, la différence de pression dans les chambres tend à le ramener dans cette position médiane, et des moyens, commandés par l'organe de commande, pour isoler les deux chambres desdites valves, ou pour relier lesdites valves au réservoir et à la source de pression.

10. Dispositif selon la revendication 9, caractérisé en ce que les moyens pour isoler les deux chambres comprennent une électrovanne (64) capable de relier une conduite auxiliaire (63) soit au réservoir, soit à la source de pression, cette conduite auxiliaire étant reliée aux chambres à travers un clapet (62) qui se ferme quand la conduite auxiliaire (63) est reliée au réservoir, et la conduite auxiliaire étant d'autre part connectée à un clapet commandé (65), qui relie les vannes au réservoir quand la conduite auxiliaire est sous pression et les en isole quand la conduite auxiliaire est reliée au réservoir.

11. Dispositif selon la revendication 10, caractérisé en ce que les moyens pour isoler les deux chambres comprennent une vanne d'isolation (37, 38) placée entre chaque chambre et la vanne à tiroir correspondante, ces vannes d'isolation étant commandées par la pression de la source de pression, à laquelle elles sont reliées à travers une électrovanne (39) elle-même commandée par l'organe de commande (20).

## Patentansprüche

1. Steuervorrichtung für einen Arbeitszylinder mit Doppelwirkung, mit einer Verteilereinheit, die die Herstellung einer Verbindung zwischen jeder von zwei Kammern (3, 4) des Zylinders (1) wahlweise mit einer Druckbeaufschlagungsquelle (6, 9) oder mit einem nicht mit Druck beaufschlagten Behälter (16) steuert, wobei diese Verteilereinheit von einem elektronischen Steuerelement (20) gesteuert wird, dadurch gekennzeichnet, daß sie einen Hauptkreis umfaßt, der Mittel enthält, um die Kammern des Zylinders vom Behälter und von der Druckbeaufschlagungsquelle zu trennen, wenn bei diesen ein Defekt auftritt, so daß der Kolben (3) des Zylinders in der Position, die er vor dem Defekt eingenommen hat, angehalten wird, und daß sie außerdem einen Hilfskreis aufweist, der Mittel enthält, um wahlweise eine der Kammern mit der Druckbeaufschlagungsquelle (6, 9) und die andere mit dem Behälter (16) zu verbinden, wobei diese Mittel von einem für die Position des Kolbens des Zylinders empfindlichen Sensor (32 bis 34, 58) gesteuert werden, derart, daß der Kolben in eine mittlere Position zurückgestellt wird, wobei diese Mittel nur in dem Fall eingreifen, in dem gleichzeitig ein Defekt der Druckbeaufschlagungsquelle und ein vom Steuerelement ausgegebenes entsprechendes Signal vorhanden sind.

2. Vorrichtung gemäß Anspruch 1, dadurch gekennzeichnet, daß der Hilfskreis Mittel umfaßt, um die Rückkehr des Kolbens in seine mittlere Position zu hemmen.

3. Vorrichtung gemäß Anspruch 2, dadurch gekennzeichnet, daß die Hemmungsmittel ein Begrenzerelement (61) aufweisen, das auf den Mitteln, die wahlweise die eine oder die andere der Kammern mit der Druckbeaufschlagungsquelle verbinden, und/oder auf den Mitteln, die wahlweise die eine oder die andere Kammer mit dem Behälter verbinden, angeordnet ist.

4. Vorrichtung gemäß Anspruch 1 oder 2, dadurch gekennzeichnet, daß ein vollständiger Defekt des elektronischen Steuerelements die Betätigung der Mittel zum Zurückführen des Kolbens in eine mittlere Position zur Folge hat.

5. Vorrichtung gemäß Anspruch 1, dadurch gekennzeichnet, daß der vollständige Defekt des Steuerelements die Trennung der Kammern des Zylinders und das Anhalten des Kolbens zur Folge hat.

6. Vorrichtung gemäß einem der Ansprüche 1 bis 5, dadurch gekennzeichnet, daß sie für jede Kammer des Zylinders umfaßt :

— ein erstes Elektroventil (10, 18), das in einer ersten Position die Kammer direkt mit der Druckbeaufschlagungsquelle verbindet und in einer zweiten Position die Kammer von der Druckbeaufschlagungsquelle trennt,

— ein zweites Elektroventil (14, 19), das in einer ersten Position die Kammer direkt mit dem Behälter (16) verbindet und in einer zweiten Position die Kammer vom Behälter trennt,

— ein Rückschlagventil (12), das dem ersten Elektroventil zugehört und den Durchgang des Fluids zur Druckbeaufschlagungsquelle blockiert, wenn deren Druck unterhalb eines gegebenen Wertes liegt,

und daß das Steuerelement (20) so auf die Elektroventile einwirkt, daß sie entweder alle in der zweiten Position gehalten werden oder gleichzeitig das erste Elektroventil einer Kammer und das zweite Elektroventil der anderen Kammer in die zweite Position umgeschaltet wird, oder umgekehrt, je nach den empfangenen Sollwerten, und so wirkt, daß sämtliche Elektroventile in der zweiten Position gehalten werden, wenn ein Defekt der Druckbeaufschlagungsquelle festgestellt wird.

7. Vorrichtung gemäß einem der Ansprüche 1 bis 5, dadurch gekennzeichnet, daß sie für jede Kammer des Zylinders umfaßt :

— ein Dreiweg-Elektroventil (50, 54), das in einer ersten Position eine Versorgungsleitung mit der Druckbeaufschlagungsquelle und in einer zweiten Position die Versorgungsleitung mit dem Behälter verbindet,

— ein Steuerventil (52, 55), das zwischen der Kammer und dem Behälter eine Verbindung herstellt, wenn die Versorgungsleitung der anderen Kammer mit der Druckbeaufschlagungsquelle verbunden ist,

— und ein Rückschlagventil (12), das zwischen der Kammer und dem Elektroventil angeordnet ist und verhindert, daß das Fluid von der Kammer in die Versorgungsleitung abfließt, wenn der Druck in dieser unter einen gewählten Wert abfällt,

und daß das Steuerelement so auf die Elektroventile einwirkt, daß sie entweder in der ersten Position gehalten werden oder gleichzeitig das Elektroventil einer ersten Kammer in die erste Position und das Elektroventil der zweiten Kammer in die zweite Position umgeschaltet wird, oder umgekehrt, je nach den empfangenen Sollwerten, und so wirkt, daß die Elektroventile in der zweiten Position gehalten werden, wenn ein Defekt der Druckbeaufschlagungsquelle festgestellt wird.

8. Vorrichtung gemäß einem der Ansprüche 6 oder 7, dadurch gekennzeichnet, daß das oder die Elektroventile einer jeden Kammer eine dritte Position aufweisen, die die Kammer vollständig von der Druckbeaufschlagungsquelle und vom Behälter trennt, wobei dann das Rückschlagventil eventuell entfallen kann.

9. Vorrichtung gemäß einem der Ansprüche 1 bis 8, dadurch gekennzeichnet, daß sie außerdem für jede Kammer des Zylinders ein Schiebeventil (30, 31), das dazu geeignet ist, die Kammer entweder mit dem Behälter (16) oder mit der Druckbeaufschlagungsquelle (6, 9) zu verbinden, wobei diese Ventile durch die Position des Kolbens des Zylinders gesteuert werden, derart, daß dann, wenn sich der Kolben in einem Abstand von der mittleren Position befindet, die Druckdifferenz in den Kammern bestrebt ist, ihn in diese mittlere Position zurückzustellen, und vom Steuerelement gesteuerte Mittel zum Isolieren der zwei Kammern von den Ventilen oder zum Verbinden der Ventile mit dem Behälter und der Druckbeaufschlagungsquelle umfaßt.

10. Vorrichtung gemäß Anspruch 9, dadurch gekennzeichnet, daß die Mittel zum Trennen der zwei Kammern ein Elektroventil (64) aufweisen, mit dem eine Hilfsleitung (63) entweder mit dem Behälter oder mit der Druckbeaufschlagungsquelle verbunden werden kann, wobei diese Hilfsleitung über ein Ventil (62), das geschlossen wird, wenn die Hilfsleitung (63) mit dem Behälter verbunden ist, mit den Kammern verbunden ist, und wobei die Hilfsleitung andererseits mit einem Steuerventil (65) verbunden ist, das die Ventile mit dem Behälter verbindet, wenn die Hilfsleitung mit Druck beaufschlagt wird, und sie trennt, wenn die Hilfsleitung mit dem Behälter verbunden ist.

11. Vorrichtung gemäß Anspruch 10, dadurch gekennzeichnet, daß die Mittel zum Trennen der zwei Kammern ein Trennventil (37, 38) aufweisen, das zwischen jeder Kammer und dem entsprechenden Schiebeventil angeordnet ist, wobei diese Trennventile durch den Druck der Druckbeaufschlagungsquelle, mit der sie über ein Elektroventil (39), das selbst vom Steuerelement (20) gesteuert wird, verbunden sind.

## Claims

1. Control device for a double-acting hydraulic jack, comprising a distributor assembly controlling the selective connection of each of the two chambers (3, 4) of the jack (1) to a pressure source (6) or to a pressureless tank (16), this distributor assembly being controlled by an electronic control member (20), characterized in that it includes a main circuit comprising means for isolating the chambers of the jack from the tank and from the pressure source in the event of failure said source, with the result that the piston (3) of the jack is immobilized in the position which it occupied before the failure,

and in that it also includes an auxiliary circuit comprising means for selectively connecting one of the chambers to a pressure source (6, 9) and the other to the tank (16), these means being controlled by a sensor (32 to 34, 58) sensitive to the position of the piston of the jack, so as to return the piston to a middle position, and being operated only when there is simultaneously a failure of the pressure source and an appropriate signal emitted by the control member.

2. Device according to Claim 1, characterized in that the auxiliary circuit comprises means for slowing the return of the piston of the jack to its middle position.

3. Device according to Claim 2, characterized in that said slowing means comprise a restriction (61) located on the means selectively connecting one or other of the chambers to the pressure source and/or on the means selectively connecting one or other of the chambers to the tank.

4. Device according to Claim 1 or 2, characterized in that the complete failure of the electronic control member causes the activation of the means for returning the piston to a middle position.

5. Device according to Claim 1, characterized in that the complete failure of the control member causes the isolation of the chambers of the jack and the immobilization of the piston.

6. Device according to one of Claims 1 to 5, characterized in that it comprises for each chamber of the jack ;

— a first solenoid valve (10, 18) which, in a first position, connects the chamber directly to the pressure source and, in a second position, isolates the chamber from the pressure source,

— a second solenoid valve (14, 19) which, in a first position, connects the chamber directly to the tank (16) and, in a second position, isolates the chamber from the tank,

— a non-return valve (12) which is associated with the first solenoid valve and which opposes the passage of fluid towards the pressure source if the pressure of the latter is below a given value,

— and in that the control member (20) acts on the solenoid valves either to maintain them all in the second position or to bring the first solenoid valve of one chamber and the second solenoid valve of the other chamber simultaneously into the first position, or vice versa, according to the instructions received, and acts to maintain all the solenoid valves in the second position when a failure of the pressure source is detected.

7. Device according to anyone of Claims 1 to 5, characterized in that it comprises for each chamber of the jack ;

— a three-way solenoid valve (50, 54) which, in a first position, connects a feed pipe to the pressure source and, in a second position, connects the feed pipe to the tank,

— a controlled valve means (52, 55) which puts the chamber in communication with the tank when the feed pipe of the other chamber is connected to the pressure source,

— and a non-return valve (12) which is placed between the chamber and the solenoid valve and which prevents the fluid from flowing from the chamber towards the feed pipe when the pressure in the latter falls below a selected value, and in that the control member acts on the solenoid valves either to maintain them in the first position or to bring the solenoid valve of one chamber into the first position and the solenoid valve of the other chamber into the second position simultaneously, or vice versa, as a function of the instructions received, and acts to maintain the solenoid valves in the second position when a failure of the pressure source is detected.

8. Device according to either of Claims 6 or 7, characterized in that the solenoid valve or solenoid valves of each chamber has or have a third position which isolates the chamber completely from the pressure source and from the tank, the non-return valve then being omitted where appropriate.

9. Device according to any of Claims 1 to 8, characterized in that it also possesses, for each chamber of the jack, a slide valve (30, 31) designed to put the chamber in communication either with the tank (16) or with the pressure source (6, 9), these valves being controlled by the position of the piston of the jack, in such a way that, if the piston is away from a middle position, the pressure difference in the chambers tends to return it to this middle position, and means, controlled by the control member, for isolating the two chambers of said valves or for connecting said valves to the tank and to the pressure source.

10. Device according to Claim 9, characterized in that the means for isolating the two chambers comprise a solenoid valve (64) capable of connecting an auxiliary pipe (63) either to the tank or to the pressure source, this auxiliary pipe being connected to the chambers via a valve means (62) which closes when the auxiliary pipe (63) is connected to the tank, and the auxiliary pipe being connected, on the other hand, to a controlled valve means (65) which connects the valves to the tank when the auxiliary pipe is under pressure and which isolates them from it when the auxiliary pipe is connected to the tank.

11. Device according to Claim 10, characterized in that the means for isolating the two chambers comprise an isolating valve (37, 38) located between each chamber and the corresponding slide valve, these isolating valves being controlled by the pressure of the pressure source, to which they are connected via a solenoid valve (39), itself controlled by the control member (20).

FIG.:1

FIG.:2